# EUROPEAN PATENT SPECIFICATION

(11) **EP 4 635 674 B1**
(45) Date of publication and mention of the grant of the patent: **06.05.2026**
(21) Application number: 24170215.8
(22) Date of filing: 15.04.2024
(51) Int. Cl.: B23K 31/00, B21B 1/08, B22D 11/126, B23K 31/02, E04C 3/06, B23K 101/28, E04C 3/04

(54) **METHOD OF PRODUCING WELDED PLATE GIRDERS FROM THERMALLY CUT SHEETS**
VERFAHREN ZUR HERSTELLUNG VON GESCHWEISSTEN PLATTENTRÄGERN AUS THERMISCH GESCHNITTENEN BLECHEN
PROCÉDÉ DE PRODUCTION DE POUTRES EN TÔLES SOUDÉES À PARTIR DE TÔLES DÉCOUPÉES THERMIQUEMENT

(43) Date of publication of application: 22.10.2025
(73) Proprietor: Zugil, Spolka Akcyjna, 98-300 Wielun (PL)
(72) Inventor: Kudla, Krzysztof, 42-151 Walenczow (PL); Wojsyk, Kwiryn, 42-224 Czestochowa (PL); Makles, Krzysztof, 42-151 Walenczow (PL); Macherzynski, Michal, 42-152 Wilkowiecko (PL); Jokiel, Jerzy, 46-300 Olesno (PL)
(74) Representative: Belz, Anna

(56) References cited:
- CN-A- 101 074 085
- US-A- 5 121 873
- US-A1- 2022 297 242

## Description

The subject of the invention is a method for producing welded plate girders from thermally cut sheets with a thickness of 3 to 40 mm, see claim 1.

The method according to the invention is intended for use by manufacturers of plate girders and steel structures.

Current methods of producing welded structures from thermally cut sheets from metallurgical sheets to a given size include pre-welding cold straightening operations - for example using hydraulic presses or cylinders, tension along the plane of the sheets, local mechanical action with hammers, wedges and various types of clamps, and with optional using flame straightening. The last stages of manufacturing plate girders are tacking and welding the sheets into subassemblies or joining them together and finally checking the final dimensions of the workmanship to determine the level of deformation of the welded structure. Tacking and welding are carried out freely or in stiffening devices designed to reduce or prevent significant shape deviations of the constructed structures. In the latter case, however, there is an uncontrolled increase in both elastic and plastic stresses, leading not only to jamming of the structure in the devices but often to construction cracks. After the plate girder has been manufactured, the deformed elements are straightened. Straightening of plate girders to obtain the assumed dimensional tolerance is perform ed mechanically or thermally. However, due to the currently used materials that are sensitive to heat input and leading to their structural degradation, thermal straightening methods are eliminated from the sheet girder manufacturing process.

After the thermal cutting process of sheet metal, a narrow zone of high-value tensile stresses is created near their edges and cutting surfaces, which is the result of the influence of the heat zone, which, when qualitative cutting is carried out under optimal conditions of the thermal cutting process in sheet metals with a thickness of 3 to 40 mm, does not exceed 30 mm, and in the case of laser or plasma cutting, it is generally from 1 to 20 mm. A similarly negative phenomenon of creating high tensile stresses occurs during welding of sheet metal, which adds up to the tensile stresses arising after the thermal cutting process, and when the accumulated tensile stresses exceed the yield strength of the material, an uncontrolled increase in stress occurs, which results in significant deformation of steel structure elements, e.g. T-beam, box-girders, etc. included in the final welded structure.

The process of producing steel structure elements from sheet metal in this way inevitably leads to implementation conditions requiring the use of extremely time-consuming and expensive straightening operations of the constructed structure elements. Straightening operations are not only complicated and require highly qualified technical staff, but also extremely time-consuming and expensive, which radically reduces production efficiency.

A method for producing steel sheets without dimensional deformations is known from the Polish patent description of the invention PL223629B1. In this method, sheets are obtained from hot-rolled steel sheets and strips, which are tightly rolled in the form of high-mass coils, which are then unwound on a decoiler. The method of producing steel sheets consists in mechanical cleaning of the surface and cold rolling, which introduces deformations of the strip as a result of reducing its thickness in the range from 0.5 to 5%, but most often in the range from 1.0 to 2.5 %, then longitudinal cutting, straightening and cross cutting are performed within one workstation. Longitudinal cutting operations are performed before the straightening operation, which is performed with the vertical adjustment of the rollers in a multi-roll straightener, while cross-cutting operations are performed immediately after the straightening operation, while the belt is running.

A method for removing uneven residual stresses arising in thermally cut steel sheets is known from the Japanese invention application JP2000301220A. As a result of thermal cutting, stresses appear in sheet metal, causing elongation, contraction and transverse bending of the sheet. If the deformation of the steel sheet due to the release of residual stresses is large, the shape and length of the cut steel sheet may deviate from the tolerance range. In this method, the stress values are measured in several places, and the residual stress values are corrected depending on the length of the tested element. The method consists in measuring the temperature distribution on the surface of a thermally cut steel sheet that has been straightened using a hot straightening device using a thermometer. Then, based on the measured temperature, the distribution of residual stresses in the tested sheet metal is calculated, on the basis of which parameters are determined and compared with its permissible values. When these parameters are not within the permissible range, correction of the deformation of the sheet metal is carried out by straightening using a straightening device.

A method for correcting post-welding deformations of steel box structures made of large-size sheet metal is known from the Chinese patent description of the invention CN108465715B. The method involves mechanical correction of deformations in the steel structure by introducing stresses into the corrected structure using the rollers of the correcting device.

US 2022/297242 Al (describing the preamble of claim 1) shows a method of producing a welded I-beam from thermally cut sheets, in which blanks are thermally cut from a steel sheet.

The goal of the solution according to the invention is to develop a method for producing welded plate girders with minimal dimensional deviations, enabling the elimination of their post-welding straightening. The second goal of the solution according to the invention is to develop an energy-saving method enabling the reduction of tensile stresses and the introduction of compressive stresses in the area of the edges of sheet metal, and thus eliminating deformations in sheet blanks before the welding process of the plate girder, introduced after the process of thermal cutting of the metal sheet.

The present invention defines, according to claim 1, a method of producing welded plate girders from thermally cut sheets, in which blanks are thermally cut out of a sheet of steel sheet with a metallically clean surface prepared for cutting and said blanks are subjected to a straightening operation, and then, after immobilizing the cut sheet blanks relative to each other, they are welded together to form structural subassemblies. or its entirety, wherein each thermally cut sheet metal blank, before the welding operation, is subjected to a process of symmetrical compression simultaneously from the top and bottom of the sheet metal blank, using cylinders or rollers, until a permanent reduction in the thickness of the sheet metal blank is obtained in the range of 0.5 up to 1.5% of the thickness of the initial sheet metal, in the area along its thermally cut edges. The area along the thermally cut edges is a strip at least 20 mm wide, encompassing the heat affected zone created by the thermal cutting operation.

It is advantageous if the sheet metal blank is subjected to a dynamic or static burnishing process along its thermally cut edges after symmetrical compression from the top and bottom of the sheet metal blank using cylinders or rollers.

The tests carried out showed that the use of a symmetrical compression stage of the sheet metal blank in the method according to the invention in order to introduce compressive stresses by permanently reducing its thickness in the range of 0.5 to 1.5% made it possible to increase the flatness of the blanks and eliminate post-welding straightening of the structure, especially thermal straightening. , which in the case of heat-sensitive steels determines the possibility of safe operation of the structure.

Obtaining a plate girder with minimal dimensional deviations using the method according to the invention resulted in the acceleration and reduction of the costs of its production, but also ensured higher quality of the girder, especially in terms of increased corrosion resistance resulting from the reduction of tensile stress areas in the girder and the enlargement of compressive areas.

The introduction of compressive stresses along the edges using rollers reduces the area of impact of plastic deformation only to the area covering the heat outflow zone, which is the area of metallurgical changes caused by the thermal cycle of thermal cutting, thus reducing the required plasticizing pressures on the sheet metal and thus significantly reducing the electricity consumption of the devices with much lower required power.

Moreover, the use of the stage of symmetrical compression of the sheet metal blank and dynamic or static burnishing of the edges of the sheet metal blanks before welding ensured the introduction of favorable compressive stresses to the welded components of the manufactured plate girder, which compensate for the tensile stresses arising during thermal cutting and welding and remain in the plate girder during its operation, increasing the safety margin during its future use.

The introduction of the burnishing process along the thermally cut edges of sheet metal blanks increases the efficiency of the penetration of compressive stresses in a narrow zone through strong plastic deformation of the edges of thermally cut sheet blanks, in which high-energy processes characterized by a narrow heat affected zone were used for cutting. Thanks to this, additional compressive stresses are introduced only in the area of metallurgical changes caused by the thermal cutting process, changing the unfavorable state of tensile stresses into compressive ones with low electricity consumption.

As a result of the tests, it turned out that thanks to the use of permanent plastic deformation in the solution according to the invention in the form of reducing the thickness of the sheet in the area along its thermally cut edges with a strip width of at least 20 mm, including the heat affected zone resulting from the thermal cutting operation, the angular deformation of welded plate girders was reduced on average about twice as much as welded plate girders in which the edges of the plates were not subjected to the process of introducing compressive stresses.

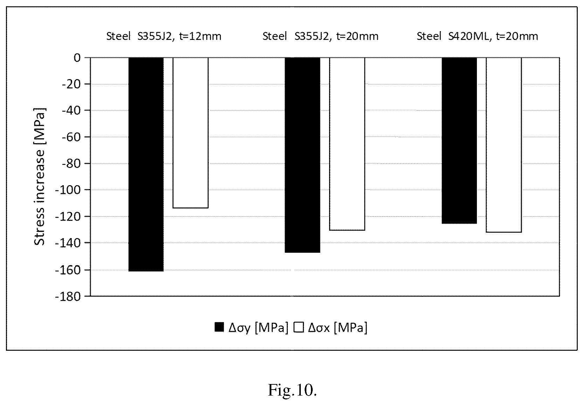

The subject of the invention is shown in an example embodiment in the drawing, in which Fig. 1 shows a welded plate girder in the form of an I-beam, Fig. 2 - a thermally cut sheet metal blank, Fig. 2a shows a thermally cut sheet metal, and Fig. 2b shows the heat affected zone caused by thermal cutting process, Fig.3 - stress distribution on the surface of sheet blanks a) web and b) plate girder flange after the laser cutting process, where the web and the plate girder flange were made of S355J2 steel and had a thickness t=12 mm, Fig.4 - location measurement points on the surface of sheet metal blanks, a) - web and b) - I-beam flange, Fig. 5 - calibrating straightening of the sheet metal blank before the bipolar compression process, Fig. 6 - bipolar compression of the sheet metal blank, Fig. 7 - distribution of residual stresses after the bipolar compression process laser cut sheets on the surface of a) web and b) flange, where the plate girder flange and web were made of S355J2 steel and had a thickness t = 12 mm, Fig. 8 - method of burnishing the edges of the sheet blank, Fig. 9 - arrangement of measurement points on the surface of the blank sheets with edges subjected to the dynamic burnishing process, fig. 10 - average values of the increase in compressive stresses obtained as a result of dynamic burnishing of the edges of sheet blanks made of S355J2 and S420ML steel, fig. 11 - location of stress measurement lines on the surface of the welded I-beam flange, fig. 12 - location of the stress measurement points on the surface of the welded I-beam flange, Fig. 13 - stress distribution on the surface of the I-beam girder flanges welded with the use of pre-welding bipolar compression and dynamic burnishing, Fig. 14 - stress distribution on the surface of the welded I-beam flanges without the use of pre-welding bipolar compression, fig. 15 - measurement of deformations in a welded I-beam, fig. 16 - stress distribution on the surface of a) the web and b) the plate girder flange after the oxy-cutting process, where the web and the plate girder flange were made of S355J2 steel and had a thickness t = 12 mm, fig. 17 - double-pole compression of sheets using rollers, Fig. 18 - distribution of residual stresses after the double-pole compression process using oxy-cut sheet metal rollers on the surface of: a) web, b) plate girder flange, where the web and the plate girder flange were made of S355J2 steel and had a thickness t = 12 mm, Fig. 19 - stress distribution on the surface of the welded B10 I-beam flange made of oxy-cut sheets using pre-welding bipolar edge compression with rollers, Fig. 20 - stress distribution on the surface of the flange of the welded B7 I-beam made of oxy-cut sheets without the use of pre-welding bipolar edge compression using rollers, Tab. 2a - method for estimating angular deformations of a plate girder, Tab. 2b - method for estimating angular deformations of a plate girder, Tab. 2c - method for estimating angular deformations of a plate girder.

### Example 1

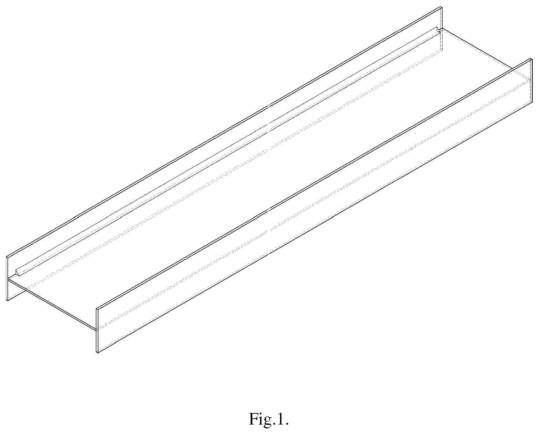

To produce the welded plate girder in the form of an I-beam shown in Fig. 1, according to the invention, metallurgical sheets made of non-alloy structural steel S355J2 and S420ML were used, intended for the web and the top and bottom flange of the I-beam. In the example embodiment, the final deformations of three welded plate girders: B1, B2, B3, made using the existing technology, which does not include the stage of permanent reduction of the thickness of thermally cut sheet metal blanks and the stage of burnishing along the thermally cut edges, were determined, and then the obtained deformations of three welded plate girders B1, B2, B3 were compared with the final deformations of three welded plate girders: B4, B5, B6, made using the method according to the invention using bipolar compression and vibration burnishing of the edges.

In the first stage of the invention, sheet metal blanks with the following dimensions, thickness x width x length, were thermally cut out of a large-format metallurgical sheet with metallically clean surfaces after the shot-blasting process, using laser and plasma cutting:
● B1, B4: steel S355J2 - web dimensions 12 x 600 x 3000 mm, top and bottom flange 12x300x3000 mm,
● B2, B5: steel S355J2 - web 12x600x3000 mm, top and bottom flange 20x300x3000 mm,
● B3, B6: steel S420ML - web 12 x 600 x 3000 mm, top and bottom flange 12x300x3000 mm

Sheets with a thickness of 12 mm were laser cut at a cutting speed of 1,200 mm/min and a beam power of 5,300 W, while sheets with a thickness of 20 mm were plasma cut with a cutting speed of 1,800 mm/min and a cutting current of 200A. The HAZ - Heat Affected Zone caused by the laser and plasma cutting process had a width not exceeding 0.8 mm.

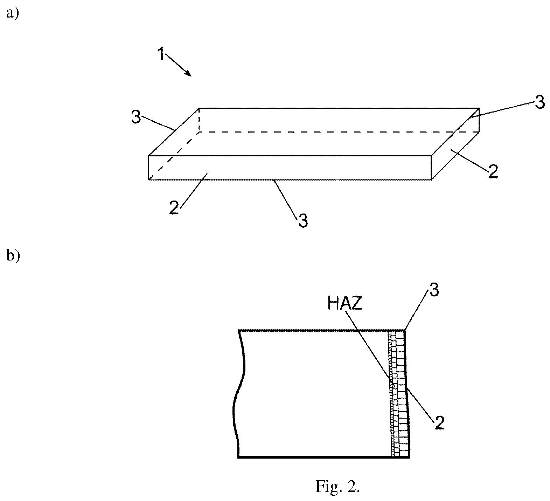

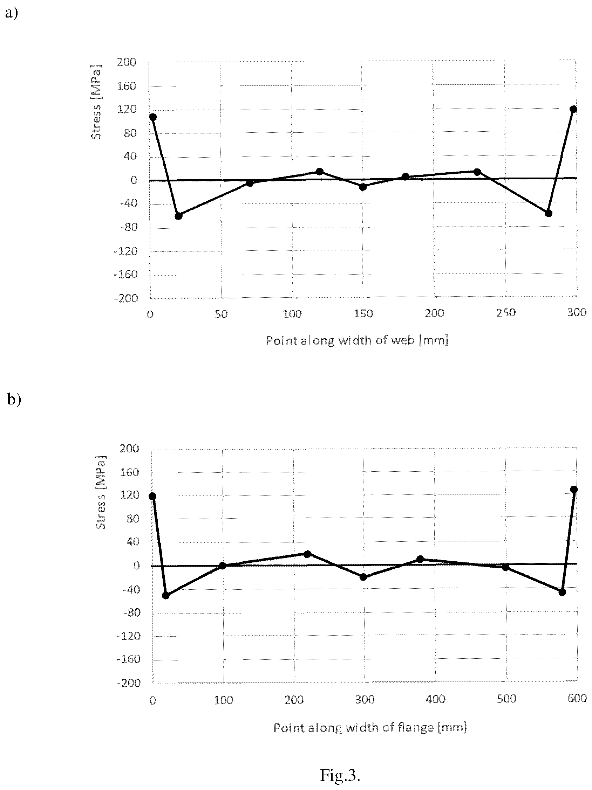

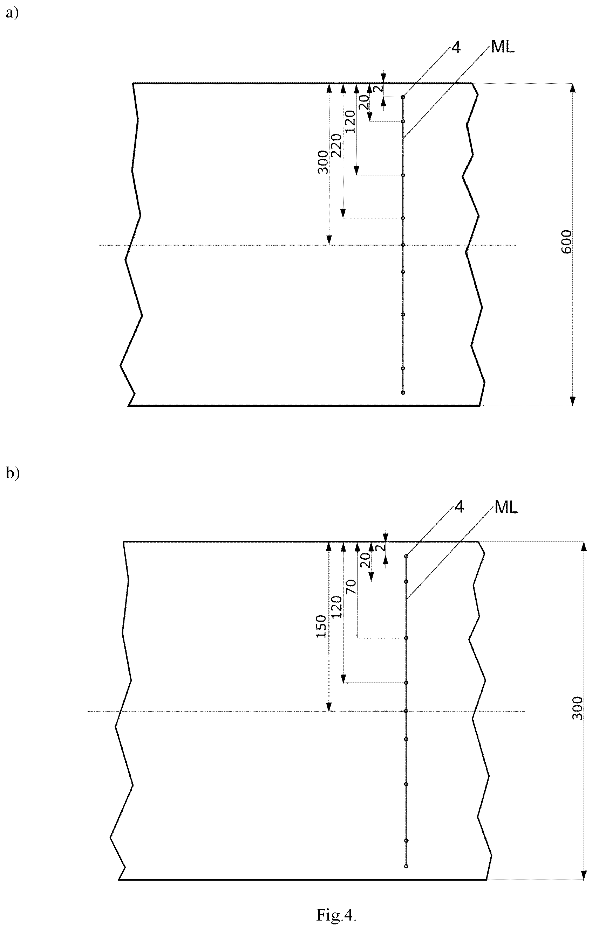

After the thermal cutting process, narrow zones of high tensile stresses were created on the surface of the cut sheet blanks, around their edges and cutting surfaces, and the linear dimensions of the cut sheet blanks were shorter than the original ones measured before the cutting process. As a result, the areas around the edges of the sheet metal blanks, being stretched themselves, caused contraction and stretching of the remaining, previously unheated zones of the sheet metal blanks. Fig. 2 shows a thermally cut sheet metal blank, where Fig. 2a shows a thermally cut sheet metal 1 with cutting surfaces 2 and cutting edges 3, and Fig. 2b shows the heat affected zone HAZ caused by the thermal cutting process. The distribution of residual stresses on the surface of the sheet blank is shown in Fig. 3, where Fig. 3a concerns the web and Fig. 3b concerns the plate girder flange, where the web and the plate girder flange were made of S355J2 steel and had a thickness of t = 12 mm. The places of stress measurement on the surface of plate girder elements are shown in Fig. 4. where Fig. 4a concerns the location of the measurement points on the web surface and Fig. 4b concerns the location of the measurement points on the surface of the I-section flange.

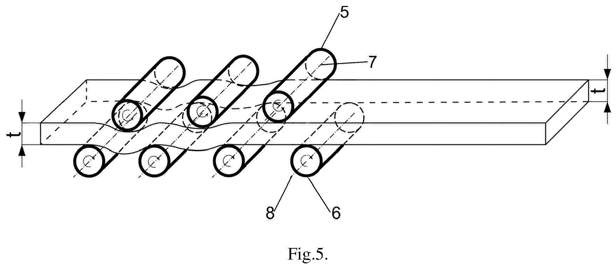

Due to the occurrence of deformations on the sheet metal blanks after the thermal cutting process, complicating the proper performance of the next stage consisting in symmetrical compression of the edges of the sheet metal - their blanks were subjected to a calibration straightening process using cylinders, maintaining the same thickness of the sheet metal blanks after straightening, as shown in Fig. 5, which is shown the upper cylinders were 5, the lower cylinders were 6, the axis of the upper cylinder was 7, the axis of the lower cylinder was 8, and the thickness of the sheet metal blank was t. The distance between the axes of the cylinders was 100 mm and their diameter was 88 mm. The upper cylinders were shifted relative to the lower cylinders by 50 mm, so that the axes of the upper cylinders were symmetrically between the axes of the lower cylinders.

Each of the thermally cut sheet metal blanks intended for B4, B5, B6 plate girders, after the straightening operation, was subjected to the process of reducing tensile stresses on the edges of the sheet blanks by symmetrically compressing them simultaneously from the top and bottom of the sheet blanks, until a permanent reduction in the thickness of the sheet blanks was achieved in the area along their cut edges.

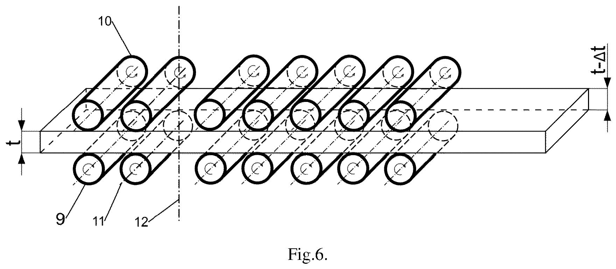

The diameters of the cylinders were 88 mm and the distance between their axes was 100 mm. The upper cylinders 10 relative to the lower cylinders 9 were in an axis 12 perpendicular to each pressed sheet, so that the main axes 11 of the upper and lower cylinders were in one plane, as shown in Fig. 6. The gap between the tangents of the cylinders perpendicular to their axes perpendicular to the surfaces of the pressed sheets varied in the range from 12 mm to 11.8 mm for 12 mm thick sheets, while for 20 mm thick sheets the gap varied in the range of 20 mm to 19.75 mm. The minimum gap value is the sum of the plastic and elastic strains of the compressed sheet and is smaller than the final thickness of the compressed sheet in the area of its edges by the value of elastic strains. The bipolar compression process included an area containing the heat affected zone created during the thermal cutting operation running along the thermally cut edges of the sheet metal blanks. The bipolar compression process was carried out until permanent plastic deformation was achieved in the form of a reduction in the thickness of the sheet metal in the area of their edges with the width of a strip covering the heat affected zone resulting from the thermal cutting process. The plastic deformation Δt of sheets with a thickness of 12 mm varied in the range of 0.08 mm to 0.10 mm, and of sheets with a thickness of 20 mm in the range of 0.11 mm to 0.15 mm, which corresponded to a reduction in thickness on average by approximately 0.66 - 0.83% and 0.55 - 0.75% respectively in relation to the initial thickness of the sheet measured along the cutting edge in the area of the heat affected zone.

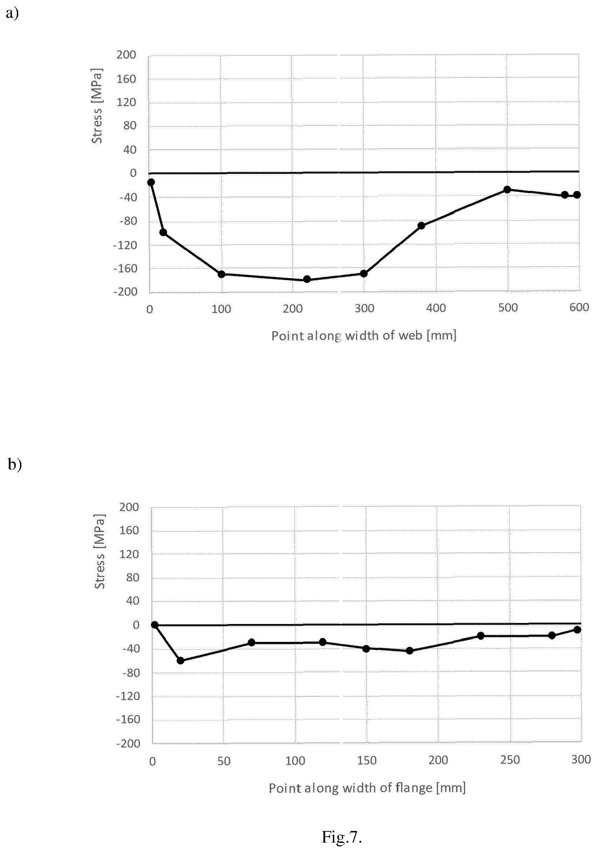

The obtained stress distribution on the surface of punched sheets with dimensions of 300 mm × 3000 mm and 600 mm x 3000 mm after the symmetrical compression operation is presented in Fig. 7, where Fig. 7a concerns the web, while Fig. 7b concerns the plate girder flange, with the plate girder flange and the web it was made of S355J2 steel and had a thickness t = 12 mm, and the location of the stress measurement points was as in Fig. 4.

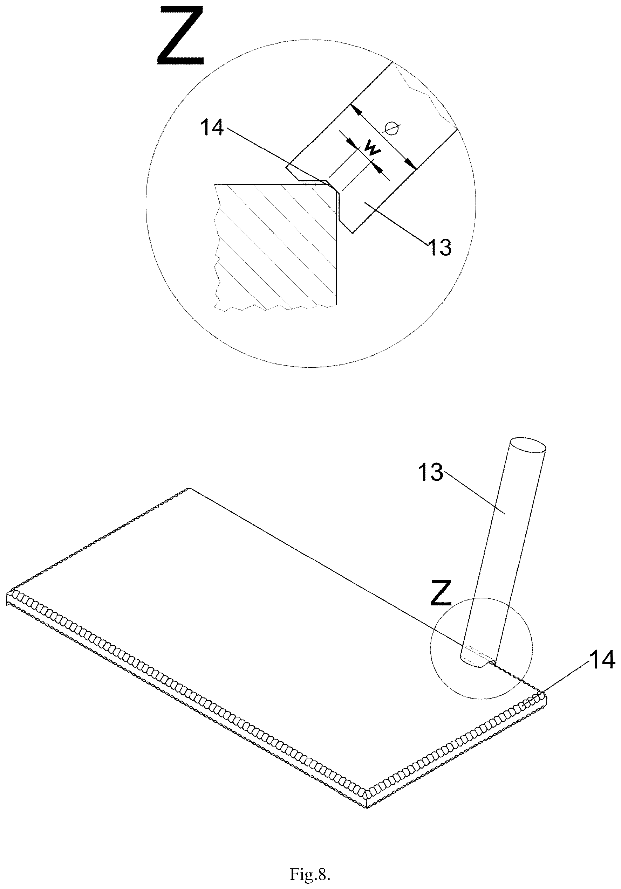

In the next stage of the method according to the invention, shown in Fig. 8, the edges of the sheet metal blanks were subjected to a dynamic burnishing process, the aim of which was to introduce additional compressive stresses through permanent plastic deformation of the edges of the sheet metal blanks after the process of straightening and symmetrical bipolar compression.

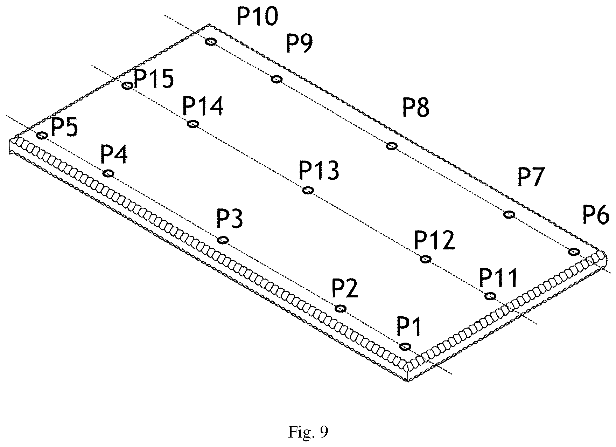

To carry out the dynamic burnishing process, a tool in the form of an impact ram 13 with an external diameter of ø = 15 mm and a working surface with a width of w = 3 mm was used, which burnished the edges of each sheet metal blank with a frequency of 120 Hz and a tool movement speed of 20 cm/min, which caused permanent plastic deformation of the edges of sheet metal blanks to a depth of 0.17 mm and introduced favorable compressive stresses in their vicinity. Dynamic burnishing of the edges of a sheet metal blank is shown in Fig.8. which shows a sheet metal blank with dimensions of 300 mm × 3000 mm, tool 13 and a plastically deformed edge 14. The arrangement of measurement points on the surface of the sheet metal blank with edges subjected to the dynamic burnishing process is shown in Fig. 9. The results of stress measurements on the surface and edges of sheet metal blanks are presented in Table 1.

The stresses were determined in the X-axis directions - longitudinal stresses to the burnishing line σx and in the Y direction - transverse stresses to the burnishing line σy. Measurements were made at fifteen points shown in Fig. 9. Ten measurements near the edge treated with dynamic burnishing included points P1-P5 and P6-P10, while five measurements in the untreated material included points P11-P15. As a result of impact treatment, a compressive stress state of significant value was obtained. The determined values of the introduced increase in compressive stresses Dσ ranged from 120 to 160 MPa for structural steels S355J2 and S420ML, proving the advisability of using dynamic burnishing for sheets cut using cutting processes with a heat affected zone HAZ not exceeding 0.8 mm.

**Tab. 1. Results of stress measurements on the surface and edges of sheet metal blanks**

| | **steel S355J2, t =12mm** | | **steel S355J2, t =20mm** | | **steel S420ML, t =12mm** | |
|---|---|---|---|---|---|---|
| | **σ_{y} [MPa]** | **σₓ [MPa]** | **σ_{y} [MPa]** | **σₓ [MPa]** | **σ_{y} [MPa]** | **σₓ [MPa]** |
| **P1** | -258 | -223 | -260 | -250 | -234 | -210 |
| **P2** | -300 | -268 | -243 | -230 | -262 | -277 |
| **P3** | -280 | -260 | -253 | -242 | -276 | -236 |
| **P4** | -271 | -249 | -276 | -236 | -245 | -243 |
| **P5** | -266 | -226 | -240 | -206 | -230 | -225 |
| **P6** | -274 | -209 | -258 | -210 | -250 | -239 |
| **P7** | -285 | -211 | -300 | -236 | -243 | -264 |
| **P8** | -290 | -255 | -280 | -240 | -254 | -266 |
| **P9** | -255 | -243 | -271 | -269 | -250 | -250 |
| **P10** | -282 | -215 | -266 | -250 | -300 | -220 |
| **P11** | -119 | -111 | -110 | -105 | -144 | -126 |
| **P12** | -111 | -125 | -116 | -106 | -123 | -100 |
| **P13** | -114 | -114 | -118 | -119 | -116 | -101 |
| **P14** | -105 | -133 | -118 | -95 | -139 | -106 |
| **P15** | -125 | -128 | -125 | -106 | -122 | -122 |
| **Δσ** | **-161** | **-114** | **-147** | **-131** | **-126** | **-132** |

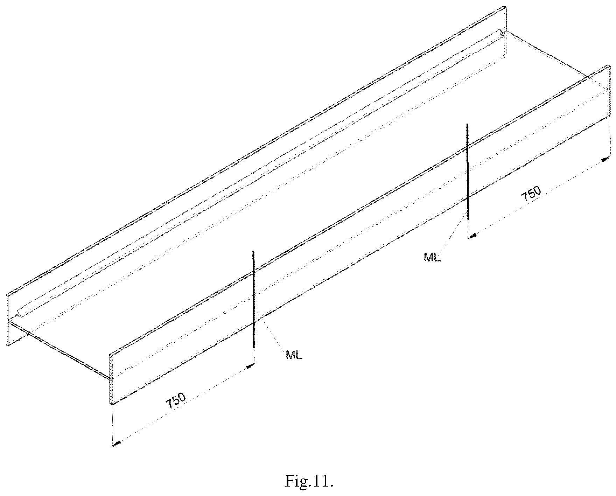

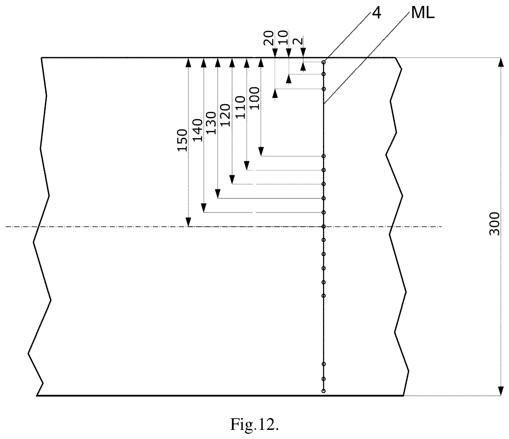

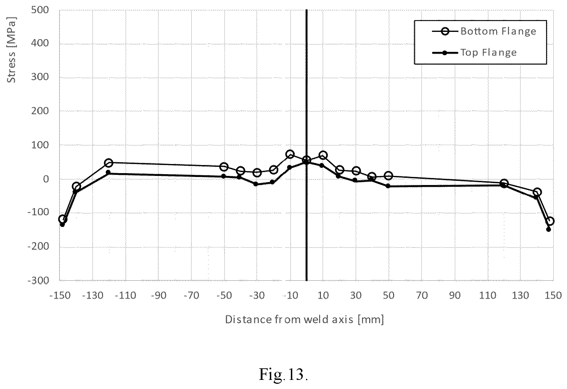

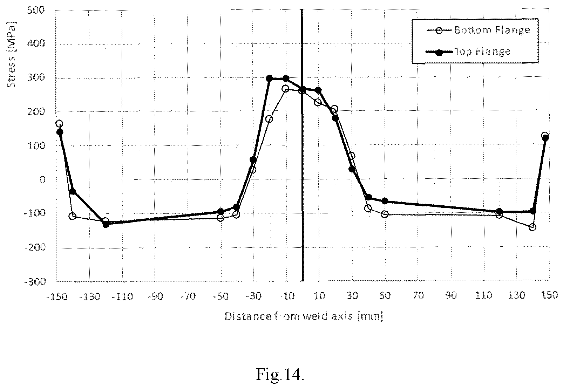

The sheet metal blanks prepared in this way, having the assumed dimensional tolerance, were tacked and welded into an I-beam girder constituting a welded plate girder. The effect of the method according to the invention is to obtain structures with a reduced level of tensile stresses, especially in the area of their edges. The place of stress measurement and the distribution of measurement points are shown in Fig. 11 and 12, and the stress distribution on the surface of the I-beam girder flanges welded using pre-welding bipolar compression and dynamic burnishing is shown in Fig. 13. For comparison purposes, Fig. 14 shows the stress distribution on the surface of a welded I-beam web made using the previously used technology without the use of pre-welding bipolar compression and dynamic burnishing of the edges of the sheets.

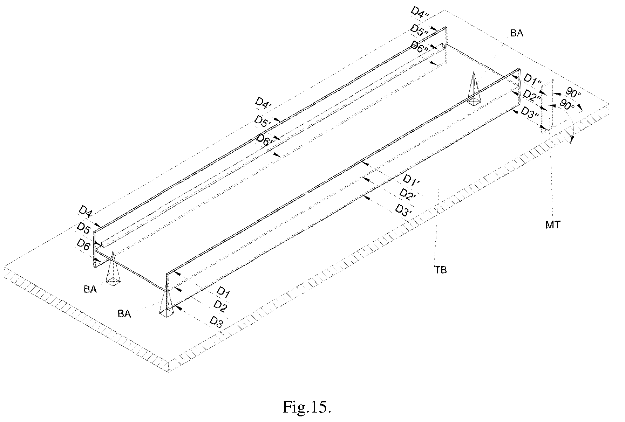

The degree of deformation of the resulting plate girder was determined as follows. On the measuring table (TB), the tested plate girder and the measuring instrument (MT) located perpendicular to the measuring table were placed on measuring bases (BA). Deformation measurements were initially carried out in three planes, represented by linear displacements of the points of the welded plate girder D1, D2, D3, D4, D5, D6, D1', D2', D3', D4', D5', D6', D1", D2", D3", D4", D5", D6" shown in Fig.15. The method of determining angular strains is presented in Table 2a-c, and their values in Table 3.

The deformation, constituting the sum of angular deformations of a plate girder welded from sheet metal blanks with edges compressed bipolarly using cylinders and their dynamic burnishing, was two times smaller than the degree of deformation of a plate girder made from the same thermally cut sheet metal blanks, which were subjected to the same stages of straightening and welding before welding. omitting the stage of bipolar compression and dynamic edge burnishing.

**Tab. 3. Angular deformations of plate girders welded from laser and plasma cut sheets.**

| Designation of angular strain | Angular deformation of welded plate girders without compressing the edges of the plates | | | Angular deformation of a welded plate girder with compression of the edges of the plates using rollers | | |
|---|---|---|---|---|---|---|
| | B1 | B2 | B3 | B4 | B5 | B6 |
| α₁ | 1°37' | 0°43' | 1°40' | 0°26' | 0°00' | 0°20' |
| α₂ | 0°29' | 0°43' | -0°14' | 0°23' | 0°28' | 0°11' |
| α₃ | 0°29' | 0°43' | 0°29' | 0°34' | -0°28' | 0°17' |
| α₄ | 1°26' | 0°20' | 0°57' | 0°00' | 0°28' | 0°20' |
| α₁' | 1°14' | 0°43' | 1°40' | 0°29' | 0°28' | 0°46' |
| α₂' | 1°03' | 1°00' | 0°14' | 0°29' | 0°28' | 0°29' |
| α₃' | 0°06' | 1°00' | 0°43' | 0°29' | 0°28' | 0°23' |
| α₄' | 1°55' | 0°14' | 0°43' | 0°43' | 0°57' | 0°29' |
| α₁" | 1°23' | 1°00' | 1°55' | 0°17' | 0°28' | 0°03' |
| α₂" | 0°51' | 0°43' | -0°14' | 0°06' | 0°28' | 0°32' |
| α₃" | 0°54' | 1°00' | 0°34' | 0°00' | 0°28' | 0°03' |
| α₄" | 0°57' | 0°06' | 0°34' | 0°14' | 0°28' | 0°26' |

The introduction of opposing stresses to the tensile stresses occurring especially in the area of the edges of the sheets during the welded plate girder manufacturing process made it possible to obtain low levels of welding residual stresses and deformations, and as a result, dimensional tolerance with permissible shape deviations, which consequently allowed to eliminate the cumbersome and time-consuming process of straightening the welded plate girder structure.

Taking into account the obtained data presented in Table 3, it should be concluded that carrying out the process of symmetrical compression of sheet metal blanks simultaneously from the top and bottom, until a permanent reduction in the thickness of the pressed sheet blanks is achieved in the area including the heat affected zone HAZ created as a result of the thermal cutting operation running along cutting edges and then carrying out dynamic burnishing along the thermally cut edges of sheet metal blanks before welding them to produce plate girders reduced the angular deformation by approximately 2 times compared to welded plate girders in which the edges of the plates were not subjected to the process of introducing compressive stresses.

### Example 2

To produce six welded plate girders B7, B8, B9, B10, B11, B12 in the form of an I-beam shown in Fig. 1, in which the web and the bottom and top flanges are made of S355J2 and 420ML steel. B7, B8, B9 sheet metal girders were made using the existing technology, which does not include the stage of permanently reducing the thickness of thermally cut sheet metal blanks using rollers in the area of its edges. Plate girders B10, B11, B12 were made according to the invention using a bipolar compression operation using rollers.

In this example, according to the invention, sheet blanks with the following dimensions were thermally cut by oxy-fuel cutting from a large-format steel sheet with metallic clean surfaces:
● B7, B10: steel S355J2 - web 12 x 600 x 3000 mm, top and bottom flange12x300x3000 mm,
● B8, B11: steel S355J2 - web 12x600x3000 mm, top and bottom flange20x300x3000 mm,
● B9, B12: steel S420ML - web 12 x 600 x 3000 mm, top and bottom flange12x300x3000 mm

Sheet blanks with a thickness of 12 mm were cut at a cutting speed of 260 mm/min, and sheets with a thickness of 20 mm were cut at a cutting speed of 220 mm/min. In both cases, the cutting gas was oxygen at a pressure of 0.5 MPa. The measured heat-affected zone HAZ, causing metallurgical changes, caused by the oxy-fuel cutting process, had the form of a strip up to 8 mm wide from the cutting edge.

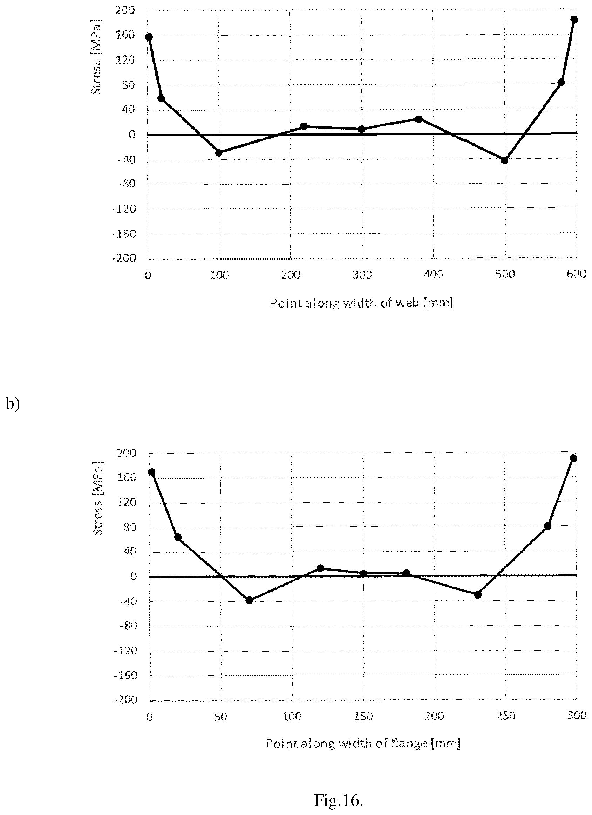

The distribution of residual stresses on the surface of the sheet metal blank is shown in Fig. 16, where Fig. 16a concerns the web, and Fig. 16b concerns the plate girder flange after the oxy-cutting process, where the web and the plate girder flange were made of S355J2 steel and had a thickness t = 12 mm. The places and points of stress measurement on the surface of the sheet metal blank from which the plate girder was then manufactured are shown in Fig. 4.

After the oxygen cutting process, the sheet metal blanks were subjected to a calibration straightening process using cylinders, maintaining the same thickness of the sheet metal blanks after straightening, as shown in Fig. 5.

Then, after the straightening operation, the sheets intended for the B10, B11, B12 plate girders were subjected to symmetrical compression simultaneously on the top and bottom of the sheet blanks using rollers, in the area along their cut edges, until a permanent reduction in the thickness of the sheet blanks was achieved, in an area with the width of a strip corresponding to a roller width of 50 mm and covering the heat affected zone resulting from the thermal cutting operation.

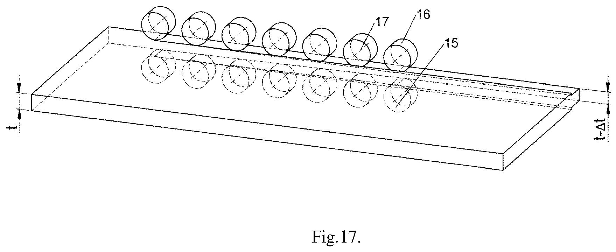

The distance between the axes of rollers with a diameter of 88 mm was 100 mm and the width of the rollers was 50 mm. The upper rollers 16 relative to the lower 15 were in an axis 18 perpendicular to the sheet metal being compressed, so that the main axes 17 of the upper and lower rollers were in one plane, as shown in Fig. 17, illustrating bipolar compression of a sheet metal blank using rollers. The gap between the tangents of the rollers perpendicular to their axes perpendicular to the surfaces of the compressed sheets varied in the range of 12 mm to 11.5 mm for sheets with a thickness of 12 mm, while for sheets with a thickness of 20 mm the gap varied in the range of 20 mm to 19.5 mm.

The bipolar compression process covered the area of the heat-affected zone running along the cutting edge resulting from the thermal cutting operation. The bipolar compression process was carried out until a permanent plastic deformation was achieved in the form of a reduction in the thickness of the sheet in the area of a strip with the width of the heat-affected zone resulting from the thermal cutting process. The permanent reduction in the thickness of the sheets was in the range Δt = 0.10 - 0.20 mm, while for sheets with a thickness of 12 mm Δt was 0.10-0.16 mm, and for sheets with a thickness of 20 mm Δt was 0.14 - 0.20 mm, which corresponded to a reduction in the sheet thickness on average by approximately 0.83-1.33% and 0.7-1%, respectively, in relation to its initial thickness measured in the HAZ area along the cutting edge.

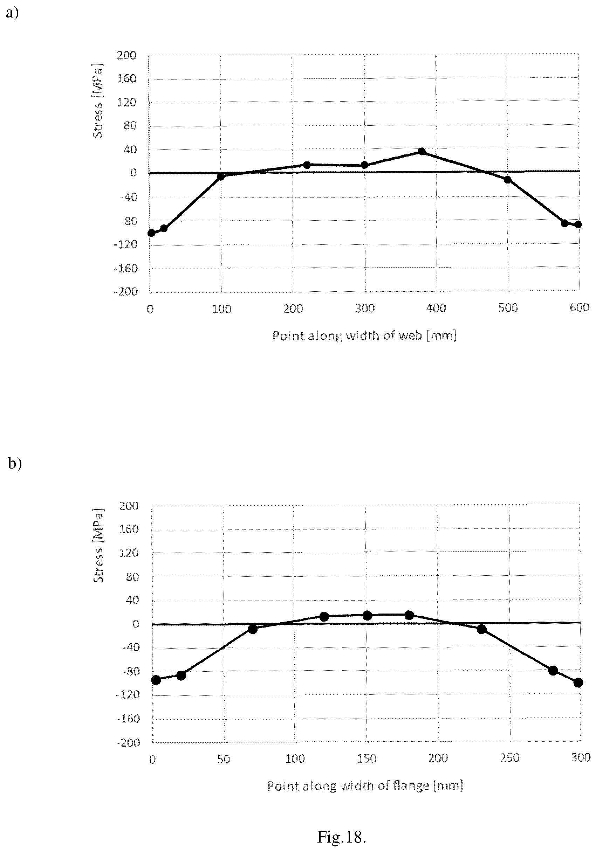

The obtained stress distribution on the surface of punched sheets with dimensions of 300 mm × 3000 mm and 600 mm × 3000 mm after the operation of oxygen cutting and roller compression is shown in Fig. 18, where Fig. 18a concerns the web, and Fig. 18b concerns the plate girder flange, with the web and flange of the plate girder were made of S355J2 steel and had a thickness of t = 12 mm.

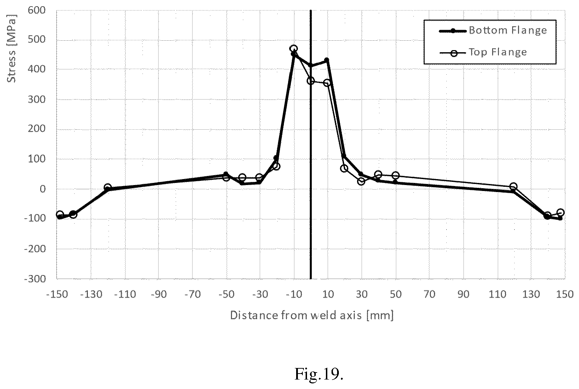

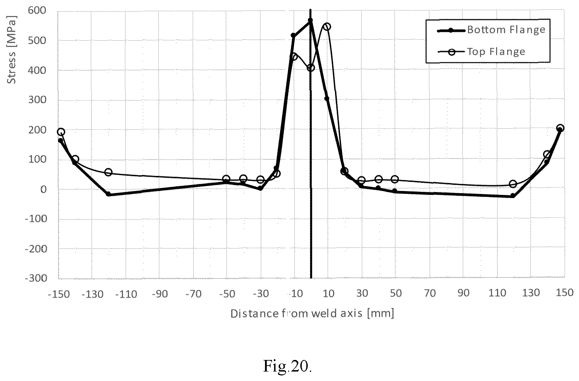

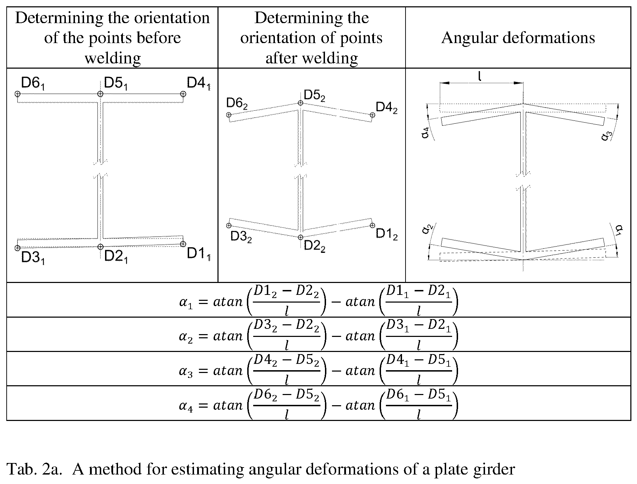

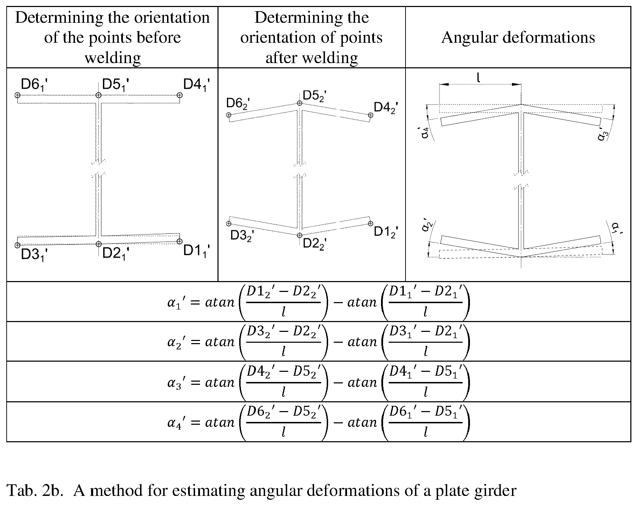

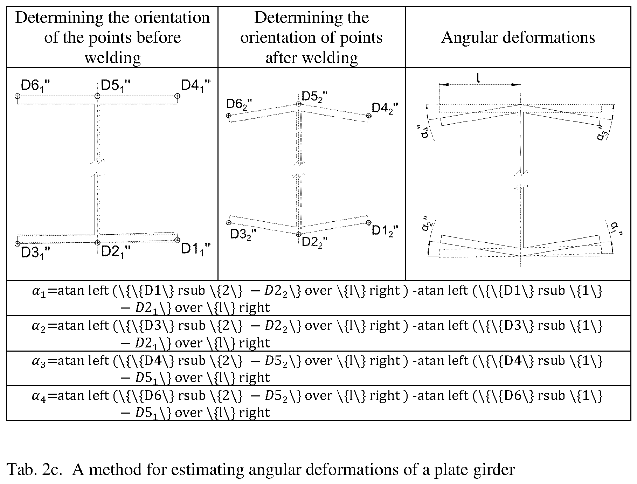

The sheet metal blanks prepared in this way, having the assumed dimensional tolerance, were tacked and welded into an I-beam girder constituting a welded plate girder. The effect of the method according to the invention is to obtain structures with a reduced level of tensile stresses, especially in the area of their edges. The method of measuring stresses is shown in Fig. 11 and 12 and their distribution in Fig. 18, with the stress measurement points as in Fig. 4. Fig. 19 shows the stress distribution on the surface of the welded flange of a B10 I-beam made of oxy-cut sheets using pre-welding bipolar edge compression with rollers. Fig. 20 shows the stress distribution on the surface of a flange of a B7 welded I-beam girder made of oxy-cut sheets without the use of pre-welding bipolar edge compression with rollers.

The degree of deformation of the welded plate girder was determined in the same way as in Example 1 by measuring the deformations in three planes represented by the displacements of the points of the welded plate girder shown in Fig. 15. The obtained strain values are listed in Table 4.

The deformation of a plate girder welded from oxy-cut sheet metal blanks with edges compressed in bipolar manner using rollers was 1.8 times smaller than the degree of deformation of a plate girder made from the same oxy-cut sheet metal blanks which, before welding, were subjected to the same stages of straightening and welding, omitting the bipolar compression stage.

**Tab. 4. Angular deformations of plate girders welded from oxy-fuel cut sheets.**

| Designation of angular strain | Angular deformation of welded plate girders without compressing the edges of the plates | | | Angular deformation of a welded plate girder with compression of the edges of the plates using rollers | | |
|---|---|---|---|---|---|---|
| | B7 | B8 | B9 | B10 | B11 | B12 |
| α₁ | 0°57' | 1°29' | 1°41' | 0°14' | 0°43' | 0°34' |
| α₂ | 1°00' | 0°17' | 0°47' | 0°52' | 0°34' | 0°20' |
| α₃ | 0°57' | 0°51' | 1°49' | 0°49' | 0°40' | 0°40' |
| α₄ | 1°32' | 1°20' | 0°14' | 0°34' | 0°26' | 0°37' |
| α₁' | 1°20' | 2°00' | 1°12' | 0°54' | 0°57' | 0°46' |
| α₂' | 1°17' | 0°40' | 1°09' | 0°43' | 0°52' | 0°52' |
| α₃' | 0°54' | 0°57' | 0°54' | 0°49' | 1°00' | 1°03' |
| α₄' | 1°17' | 0°40' | 0°54' | 0°43' | 0°32' | 0°46' |
| α₁" | 1°20' | 1°43' | 1°31' | 0°14' | 0°23' | 0°43' |
| α₂" | 0°52' | 0°26' | 1°09' | 0°46' | 0°49' | 0°46' |
| α₃" | 0°37' | 0°52' | 0°43' | 0°06' | 0°26' | 0°20' |
| α₄" | 1°43' | 0°57' | 1°32' | 1°17' | 0°52' | 0°49' |

Taking into account the data obtained, it should be concluded that bipolar compression using rollers carried out until permanent plastic deformation is obtained in the form of a reduction in the thickness of the sheet in the area including the heat affected zone HAZ resulting from the thermal cutting operation reduced the angular deformation by an average of about 2 times compared to the welded plate girder. in which the edges of the sheets have not been subjected to the process of introducing compressive stresses.

The introduction of opposing stresses to the tensile stresses occurring especially in the area of the edges of the sheets during the welded plate girder manufacturing process made it possible to obtain low levels of welding residual stresses and deformations and, as a result, dimensional tolerances with permissible shape deviations, and consequently allowed to eliminate the cumbersome and time-consuming process of straightening the welded plate girder structure.

As can be seen from the above, the presented production method made it possible to achieve a state of construction in which further shape corrections can be eliminated and the stresses causing unfavorable deformations can be significantly reduced.

The stress and strain measurements carried out showed a significant impact of the pre-welding preparation of sheet metal blanks on the final quality of the welded structure.

In the analyzed cases, it turns out that sheets intended to be components of load-bearing spatial structures, which are installed into the structure immediately after the thermal cutting process, are subject to high tensile stresses at their edges. This condition will increase the deformation of the structure after the welding process. The introduction of the solution according to the invention of compressing sheets with plastic deformation of the sheet surfaces around their edges significantly changes the state of stresses in the areas subjected to the thermal cycle caused by thermal cutting. The compressive stresses introduced into the sheets as a result of their plastic deformation compensate for the normal tension stresses introduced in the thermal cutting process, thanks to which both the final deformations and stresses reach minimum values. Assuming a lower level of stress, it is expected that during operation, a structure subjected to external loads of various types and directions will be characterized by higher durability, strength and lower level of deformation.

Preventive introduction of compressive stresses to the elements of the welded structure in the described manner enables its energy-saving production, as it eliminates or significantly limits the processes of thermal or thermomechanical straightening of the structure after welding, which accumulates additional labor costs, loss of production time, and - due to the use of gas preheating burners - causing unnecessary greenhouse gas emissions - mainly carbon dioxide and methane.

## Claims

1. A method of producing welded plate girders from thermally cut sheets, in which blanks are thermally cut from a sheet of steel sheet with a metallically clean surface prepared for cutting and subjected to a straightening operation, and then, after immobilizing the cut sheet blanks relative to each other, they are welded together in components of the structure or its entirety, **characterized in that** each thermally cut sheet metal blank is subjected to a symmetrical compression process simultaneously on the top and bottom of the sheet metal blank, using cylinders or rollers, before the welding operation, until a permanent reduction in the thickness of the sheet metal blank is achieved in the range of 0, 5 to 1.5% of the thickness of the initial sheet metal, in an area along its thermally cut edges with a strip of at least 20 mm wide, including the heat affected zone resulting from the thermal cutting operation.

2. A method for producing welded plate girders according to claim 1, **characterized in that** the sheet metal blank, after symmetrical compression from the top and bottom of the sheet metal blank using cylinders or rollers, is subjected to a dynamic or static burnishing process along its thermally cut edges.

## Patentansprüche

1. Verfahren zur Herstellung von geschweißten Blechträgern aus thermisch geschnittenen Blechen, in dem die aus einem zum Schneiden vorbereiteten, metallisch reinen Hüttenblech Blechschnitte thermisch geschnitten und einem Richtvorgang unterzogen werden und dann, nachdem die geschnittenen Blechschnitte gegeneinander fixiert worden sind, zu Unterbaugruppen der Konstruktion oder ihrer Gesamtheit zusammengeschweißt werden, **dadurch gekennzeichnet, dass** jeder thermisch geschnittene Blechschnitt vor dem Schweißvorgang gleichzeitig auf der Ober- und Unterseite des Blechschnitts mit Hilfe von Rollen oder Walzen einem Vorgang symmetrischer Kompression unterzogen wird, bis eine dauerhafte Verringerung der Dicke des Blechschnitts im Bereich von 0,5 bis 1,5 % der ursprünglichen Dicke des Blechs in einem Bereich entlang seiner thermisch geschnittenen Kanten mit einer Streifenbreite von mindestens 20 mm erreicht wird, der die durch den thermischen Schneidvorgang entstandene Wärmeeinflußzone abdeckt.

2. Verfahren zur Herstellung von geschweißten Blechträgern nach Anspruch 1, **dadurch gekennzeichnet, dass** der Blechschnitt nach dem Vorgang der symmetrischen Kompression des Blechschnitts von oben und unten einem dynamischen oder statischen Glattwalzen entlang seiner thermisch geschnittenen Kanten unterzogen wird.

## Revendications

1. Méthode de fabrication de poutrelles soudées à partir de tôles découpées thermiquement, dans le cadre de laquelle des ébauches sont réalisées au cours du processus de découpe thermique dans une tôle d'acier métallurgique à surface métalliquement propre, préparée pour la découpe et soumise à une opération de redressage, et ensuite, après l'immobilisation des ébauches les unes par rapport aux autres, elles sont soudées ensemble pour former des sous-ensembles de la structure ou de son ensemble, **caractérisée en ce que** chaque ébauche, avant l'opération de soudage, est soumise à un processus de compression symétrique effectuée simultanément par le haut et par le bas, à l'aide de rouleaux, jusqu'à obtention d'une réduction permanente de l'épaisseur de la découpe comprise entre 0,5 et 1,5 % de l'épaisseur initiale de la tôle, dans la zone le long de ses bords découpés thermiquement, sur une largeur de bande d'au moins 20 mm, comprenant la zone affectée thermiquement créée suite à l'opération de découpe thermique.

2. Méthode de fabrication de poutrelles soudées selon la revendication 1, **caractérisée en ce que** l'ébauche de tôle, après l'opération de compression symétrique du haut et du bas à l'aide de rouleaux ou de rouleaux, est soumise à un processus de brunissage dynamique ou statique le long de ses bords coupés thermiquement.
